# NEUE EUROPÄISCHE PATENTSCHRIFT

(11) **EP 3 238 538 B2**
(45) Veröffentlichungstag und Bekanntmachung des Hinweises auf die Entscheidung über den Einspruch: **30.08.2023**
(45) Hinweis auf die Patenterteilung: 14.10.2020
(21) Anmeldenummer: 17166783.5
(22) Anmeldetag: 18.04.2017
(51) Int. Cl.: A01M 23/16

(54) **KÖDERBOX UND VERFAHREN ZUM TRENNEN EINER FRESSSTELLE**
BAITED TRAP AND METHOD FOR SEPARATING A FEEDING STATION
BOÎTE À APPÂTS ET PROCÉDÉ DE SÉPARATION D'UNE COUR D'AFFOURAGEMENT

(30) Priorität: 19.04.2016 DE 102016107226
(43) Veröffentlichungstag der Anmeldung: 01.11.2017
(73) Patentinhaber: Michalski Saemann Spering GbR, 52076 Aachen (DE)
(72) Erfinder: Spering, Axel, 52076 Aachen (DE); Saemann, Björn, 65428 Rüsselsheim (DE); Michalski, Sylvia, 64521 Groß-Gerau (DE)
(74) Vertreter: Bauer, Dirk

(56) Entgegenhaltungen:
- WO-A1-2014/118583
- WO-A1-2016/116079
- DE-A1-102014 102 034
- DE-A1-102014 112 804
- DE-C- 928 497
- DE-U1-202006 002 386

## Beschreibung

Die Erfindung betrifft zunächst eine Köderbox mit den Merkmalen des Oberbegriffs des Anspruchs 1. Die Erfindung betrifft weiterhin ein Verfahren mit den Merkmalen des Oberbegriffs des Anspruchs 8.

Eine Köderbox und ein Verfahren der einleitend genannten Art sind aus DE 10 2014 102 034 A1 bekannt: Die bekannte Köderbox weist ein glockenförmiges Gehäuse auf, in dem ein Luftpolster gefangen und in dem Luftpolster die Fressstelle ausgebildet ist, und einen vertikal in dem Gehäuse geführten Schwimmer. Als Grenzpegel wird hier die Unterkante des Schwimmers angesehen. Solange die Flüssigkeit den Grenzpegel nicht übersteigt, liegt der Schwimmer unterhalb eines senkrecht von unten in das Gehäuse der bekannten Köderbox führenden Einstiegs für eine Wanderratte. Steigt die Flüssigkeit, so schwimmt der Schwimmer mit der Fressstelle auf, bis er an einer um den Einstieg umlaufenden Kante anliegt. An der Kante und an dem Schwimmer der bekannten Köderbox sind als Trennelement Dichtelemente angebracht, die den Zwischenraum zwischen der Kante und dem Schwimmer schließen und so die Fressstelle in dem Gehäuse von einem Flüssigkeitsraum mit der Flüssigkeit außerhalb des Gehäuses trennen. Die bekannte Köderbox vermeidet auf diese Weise ein Ausspülen des Giftköders aus der Köderbox und eine Kontamination der Flüssigkeit mit dem Giftköder.

Die bekannte Köderbox weist mit der in dem Gehäuse umlaufenden Kante und dem Schwimmer mit dem Dichtring einen Aufbau auf, der eine exakte Abstimmung der Komponenten aufeinander erfordert.

Insbesondere die in einem Abwasserkanal strömende Flüssigkeit kann in hohem Maße mit Feststoffen belastet sein, die sich - bei Anstieg der Flüssigkeit - auch im Gehäuse der bekannten Köderbox und an dem Schwimmer ablagern. Diese Ablagerungen können sowohl das Aufschwimmen des Schwimmers in dem Gehäuse behindern, als auch die Dichtwirkung der Dichtelemente derart beeinträchtigen, dass die Fressstelle der bekannten Köderbox überspült wird und der Giftköder in die Flüssigkeit gelangt. Die bekannte Köderbox muss daher regelmäßig auf solche Ablagerungen überprüft und - falls erforderlich - ausgetauscht oder aufwändig gereinigt werden.

Im Hintergrund der Erfindung offenbaren DE 20 2006 002 386 U1 eine Köderbox mit einem Detektor, DE 10 2014 112 804 A1 eine Köderbox mit einer Fressstelle auf einem Schwimmer und DE 928 497 B eine Köderbox mit Wandhalterung.

### Aufgabe

Der Erfindung liegt die Aufgabe zugrunde, den Aufbau der Köderbox und das Verfahren zum Trennen der Fressstelle von aufsteigender Flüssigkeit zu vereinfachen.

### Lösung

Ausgehend von der bekannten Köderbox wird nach der Erfindung vorgeschlagen, dass das Trennelement das Luftpolster ist. Die Erfindung beruht auf der Erkenntnis, dass schon das gefangene Luftpolster wirksam einen Anstieg der Flüssigkeit über seine Unterseite hinaus verhindert. Die erfindungsgemäße Köderbox vermeidet auf dieser Grundlage gegenüber dem Stand der Technik sowohl bewegliche Teile als auch Dichtelemente.

Erfindungsgemäß weist eine erfindungsgemäße Köderbox ein rohrförmiges, an dem oberen Ende geschlossenes Gehäuse mit einem Einstieg für das Nagetier an dem unteren Ende auf. Als Gehäuse kommt beispielsweise ein handelsübliches Kanalgrundrohr aus hartem PVC in Betracht, das am oberen Ende mit einem Blinddeckel verschlossen ist.

Erfindungsgemäß setzt eine Kammer, in der die Fressstelle ausgebildet ist, radial an das Gehäuse an. Eine solche Kammer kann beispielsweise durch einen radialen Abzweig aus dem Kanalgrundrohr ausgebildet sein. In der Kammer kann das Nagetier den Giftköder mühelos aufnehmen. Alternativ kann in einer einfacheren Ausführung der Köderbox der Giftköder am oberen Ende des Gehäuses angebracht sein.

Weiter vorzugsweise fällt ein Boden der Kammer ausgehend von dem Gehäuse nach Außen ab. Der abfallende Boden vermeidet ein unbeabsichtigtes Herausfallen von losen Teilen des Giftköders aus der Kammer und aus dem Gehäuse. Alternativ kann eine Kammer mit nicht abfallendem Boden beispielsweise im Übergang zum Gehäuse eine Schwelle aufweisen.

Vorzugsweise ist an der Köderbox ein auswechselbarer Deckel mit dem Giftköder angebracht. Der auswechselbare Deckel mit dem Giftköder erleichtert zum die Anpassung des Giftköders sowohl an unterschiedliche rechtliche oder klimatische Bedingungen als auch an unterschiedliche Nagetiere.

Vorzugsweise ist ein Identifikationselement zum Identifizieren der Köderbox berührungslos lesbar. Ein solches Identifikationselement erlaubt eine schnelle Kontrolle der Identität der Köderbox.

Vorzugsweise ist ein Identifikationselement zum Identifizieren des Giftköders berührungslos lesbar. Ein solches Identifikationselement erlaubt eine schnelle Kontrolle der Identität des Giftköders.

Vorzugsweise ist die Köderbox mittels einer Halterung an einer Wand eines Kanalbauwerks halterbar. Die Stellung der Köderbox in dem Kanalbauwerk kann so leicht festgelegt werden.

Ausgehend von dem bekannten Verfahren wird nach der Erfindung vorgeschlagen, dass das Trennelement ein in der Köderbox gefangenes Luftpolster ist. Das erfindungsgemäße Verfahren wird mit einer erfindungsgemäßen Köderbox ausgeführt und zeichnet sich gleichermaßen durch deren vorstehend beschriebene Vorteile aus.

Vorzugsweise wird das Luftpolster durch die ansteigende Flüssigkeit komprimiert. Auch das komprimierte Luftpolster vermeidet einen Anstieg der Flüssigkeit über seine Unterseite hinaus.

### Ausführungsbeispiele

Die Erfindung wird nachfolgend anhand von Ausführungsbeispielen erläutert. Es zeigen
- Fig. 1: eine erste erfindungsgemäße Köderbox,
- Fig. 2: eine zweite, nicht erfindungsgemäße Köderbox,
- Fig. 3: eine dritte erfindungsgemäße Köderbox und
- Fig. 4: die erste und zwei weitere erfindungsgemäße Köderboxen in einer Draufsicht in einem Kanalbauwerk.

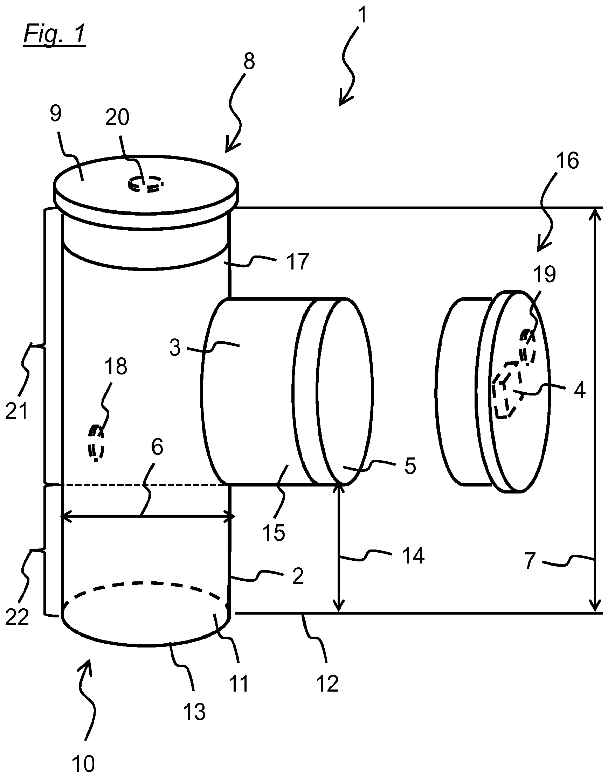

Die in Figur 1 gezeigte erste erfindungsgemäße Köderbox 1 weist ein rohrförmiges Gehäuse 2 mit einer Kammer 3 auf, in der ein Giftköder 4 angebracht und eine Fressstelle 5 für eine nicht dargestellte Wanderratte ausgebildet ist.

Das Gehäuse 2 besteht aus einem Kanalgrundrohr ("KG-Rohr") DN 100 und weist einen Durchmesser 6 von 10 *cm* und eine Höhe 7 von 25 *cm* auf. Das Gehäuse 2 ist an einem oberen Ende 8 durch einen aufgeschraubten ersten Deckel 9 luftdicht geschlossen und weist an einem offenen unteren Ende 10 einen Einstieg 11 für die Wanderratte auf. Der Grenzpegel 12, also der höchste Flüssigkeitsstand an der Köderbox 1, bei dem der Zugang des Nagetier ungehindert möglich ist, liegt auf Höhe der Unterkante 13 des Gehäuses 2.

Die Kammer 3 ist in einem Abstand 14 von 10 *cm* oberhalb der Unterkante 13 in einem radialen Abzweig 15 von dem Gehäuse 2 mit gleichfalls DN 100 ausgebildet und durch einen aufgeschraubten zweiten Deckel 16 luftdicht geschlossen. Der Giftköder 4 ist auf einer Innenseite des zweiten Deckels 16 aufgeklebt.

In eine Wandung 17 des Gehäuses 2 ist ein erstes Identifikationselement 18, und in den zweiten Deckel 16 ein zweites Identifikationselement 19, nämlich je ein RFID-Chip mit einer festen, eindeutigen Kennung eingegossen. In dem ersten Deckel 9 am oberen Ende 8 des Gehäuses 2 ist eine Dokumentationseinrichtung 20 mit einem passiven Infrarotsensor zur Präsenzerkennung integriert.

Der Infrarotsensor erkennt ein in die Köderbox 1 eindringendes Nagetier anhand seiner Körperwärme. Bei einem Verbleib des Nagetiers in der Köderbox 1 von mindestens einer Minute wird Fraß an dem Giftköder 4 angenommen und mit Zeitstempel in einem Datenspeicher der Dokumentationseinrichtung 20 abgelegt. In einer anderen (nicht dargestellten) erfindungsgemäßen Köderbox 1 ist die Dokumentationseinrichtung 20 zur Präsenzerkennung mit einem funkbasierten Ortungs- und Abstandssensor (sog. "RADAR") ausgerüstet.

Die Dokumentationseinrichtung 20 liest beim Zusammenbau der Köderbox 1 automatisch die Kennungen der beiden Identifikationselemente 18, 19 und legt auch diese in dem Datenspeicher ab. Die Dokumentationseinrichtung 20 weist ein Sende- und Empfangsmodul zur drahtlosen Kommunikation, insbesondere ein RFID-Modul zur Nahfeldkommunikation auf und stellt über dieses auf Abruf die in dem Datenspeicher abgelegten Daten bereit.

In dem Datenspeicher werden bei der Konfiguration der Köderbox 1 für den Einsatz in einem Kanalschacht sowohl absolute Koordinaten des Kanalschachts in Form von Geobasisdaten als auch Angaben zur Position in Klartext wie beispielsweise die nächstgelegene Straßenanschrift, die Straßenseite mit Fahrt- und oder Himmelsrichtung und zum zugehörigen Kanal abgelegt. Soweit vorhanden liest die Dokumentationseinrichtung 20 beim Einsetzen der Köderbox 1 in den Kanalschacht auch automatisch dessen Kennung und legt diese gleichfalls in dem Datenspeicher ab. Beim Abruf der Daten verknüpft die Dokumentationseinrichtung 20 ihre eigene eindeutige Kennung mit diesen durch einen Streuwert (sog. "Hashwert", z.B. MD5).

Der erste Deckel 9 und der zweite Deckel 16 sind auswechselbar und erleichtern die bedarfsgerechte Konfiguration der Köderbox 1, beispielsweise mit unterschiedlichen Giftködern und mit unterschiedlichen Dokumentationseinrichtungen und Sensoren.

Die erste Köderbox 1 ist für den Einsatz in Kanälen geeignet, in denen sie nicht um mehr als etwa 100 cm oberhalb des Grenzpegels 12 mit Flüssigkeit überspült wird. Bis zu dieser Obergrenze wird das in der Köderbox 1 gefangene Luftpolster 21 nur soweit komprimiert, dass es den Anstieg der Flüssigkeit über den zwischen dem Grenzpegel 12 und der Kammer 3 ausgebildeten Flüssigkeitsraum 22 hinaus begrenzt. Das Luftpolster 21 umschließt so in jedem Betriebszustand die Fressstelle 5 der Köderbox 1 und verhindert wirksam ein Ausspülen des Giftköders 4.

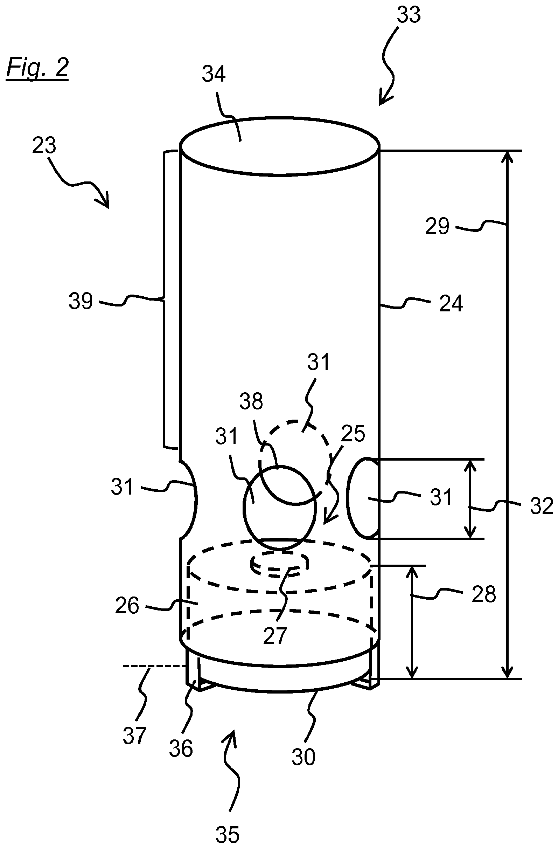

Die in Figur 2 gezeigte zweite nicht erfindungsgemäße Köderbox 23 weist ein gleichfalls rohrförmiges Gehäuse 24 auf, aber ohne radial an dem Gehäuse 24 ansetzende Kammer. Stattdessen ist die Fressstelle 25 hier auf einem zylindrischen Schwimmer 26 ausgebildet, der in dem Gehäuse 24 vertikal geführt ist. Auf dem Schwimmer 26 ist ein Giftköder 27 aufgeklebt. Der Schwimmer 26 besteht aus geschäumtem und schlagfest lackierten Polystyrol und weist eine Höhe 28 von 6 *cm* auf. In den Schwimmer 26 ist eine (nicht dargestellte, der ersten Köderbox 1 entsprechende) Dokumentationseinrichtung mit einem passiven Infrarotsensor zur Präsenzerkennung integriert.

Das Gehäuse 24 besteht aus einem Kanalgrundrohr DN 100 mit einer Höhe 29 von 30 *cm* und weist 8 *cm* über der Unterkante 30 des Gehäuses 24 vier kreisförmige Einstiege 31 mit einem Durchmesser 32 von je 3 *cm* für das Nagetier auf. Es ist am oberen Ende 33 mit einem aufgeschweißten Deckel 34 verschlossen und am unteren Ende 35 mit einer abnehmbaren Klammer 36 versehen, die ein Herausfallen des Schwimmers 26 vermeidet. Der Grenzpegel 37 liegt um die Höhe 28 des Schwimmers 26 unter den Einstiegen 31.

Bei Ansteigen der Flüssigkeit über den Grenzpegel hinaus schwimmt der Schwimmer 26 zunächst auf. Sobald die Flüssigkeit die Oberkante 38 der Einstiege 31 erreicht, wird das darüber gefangene Luftpolster 39 komprimiert

Die zweite Köderbox 23 ist für den Einsatz in Kanälen geeignet, in denen sie um mehrere Meter überspült wird, ohne dass der Giftköder 27 mit der Flüssigkeit in Kontakt kommen kann. Um das Eindringen von Spritzwasser - beispielsweise im Rahmen einer Hochdruckspülung des Kanals - durch die Einstiege 31 zu vermeiden, können diese mit einem nicht dargestellten, nach unten offenen Kragen umgeben werden.

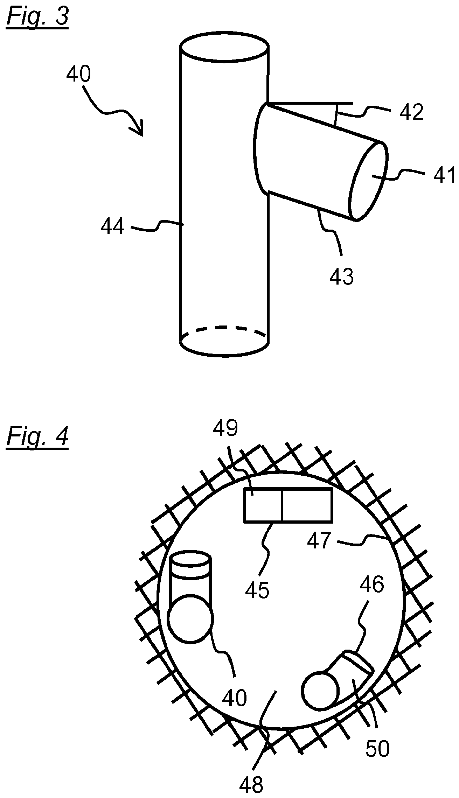

Figur 3 zeigt eine dritte erfindungsgemäße Köderbox 40 als Variante der ersten Köderbox 1: Die Kammer 41 weist hier einen mit einem Winkel 42 von 10 ° zur Horizontalen nach Außen abfallenden Boden 43 auf, so dass auch etwaige Bruchstücke des Giftköders nicht unbeabsichtigt aus der Kammer in das Gehäuse 44 und von dort in die Flüssigkeit im Kanal gelangen.

Figur 4 zeigt in einer Ansicht von unten die dritte Köderbox 40 sowie zwei weitere erfindungsgemäße Köderboxen 45, 46, die beispielhaft mittels nicht dargestellter Halterungen an einer Wand 47 eines Kanalschachts 48 fest montiert sind. Die vierte Köderbox weist einen rechteckigen Rohrquerschnitt 49 auf und entspricht ansonsten der ersten Köderbox 1. Die fünfte Köderbox 46 entspricht im Wesentlichen der dritten Köderbox 40, weist aber einen entlang der Wand leicht geschwungenen Verlauf der Kammer 50 auf, um in engen Kanälen deren freien Querschnitt möglichst wenig einzuschränken.

In den Figuren sind
- 1: Köderbox
- 2: Gehäuse
- 3: Kammer
- 4: Giftköder
- 5: Fressstelle
- 6: Durchmesser
- 7: Höhe
- 8: oberes Ende
- 9: erster Deckel
- 10: unteres Ende
- 11: Einstieg
- 12: Grenzpegel
- 13: Unterkante
- 14: Abstand
- 15: Abzweig
- 16: zweiter Deckel
- 17: Wandung
- 18: erstes Identifikationselement
- 19: zweites Identifikationselement
- 20: Dokumentationseinrichtung
- 21: Luftpolster
- 22: Flüssigkeitsraum
- 23: Köderbox
- 24: Gehäuse
- 25: Fressstelle
- 26: Schwimmer
- 27: Giftköder
- 28: Höhe
- 29: Höhe
- 30: Unterkante
- 31: Einstieg
- 32: Durchmesser
- 33: oberes Ende
- 34: Deckel
- 35: unteres Ende
- 36: Klammer
- 37: Grenzpegel
- 38: Oberkante
- 39: Luftpolster
- 40: Köderbox
- 41: Kammer
- 42: Winkel
- 43: Boden
- 44: Gehäuse
- 45: Köderbox
- 46: Köderbox
- 47: Wand
- 48: Kanalschacht
- 49: Rohrquerschnitt
- 50: Kammer

## Patentansprüche

1. Köderbox (1, 40, 45, 46) mit einem Gehäuse (2, 44), mit einer Fressstelle (5) in dem Gehäuse (2, 44) für einen Giftköder (4), die von einer Außenseite der Köderbox (1, 40, 45, 46) durch einen Einstieg (11) an einem unteren Ende (10) des Gehäuses (2, 44) für ein Nagetier zugänglich, in dem Gehäuse (2, 44) in einem Luftpolster (21) angeordnet ist, und mit einem Trennelement, das bei Ansteigen einer Flüssigkeit außerhalb des Gehäuses (2, 44) über einen Grenzpegel (12), oberhalb dessen die Zugänglichkeit der Fressstelle (5) für das Nagetier nicht mehr gewährleistet ist, innerhalb des Gehäuses (2, 44) einen Flüssigkeitsraum (22) mit der Flüssigkeit begrenzt, der sich von dem Grenzpegel (12) bis zu dem Trennelement erstreckt und die Fressstelle (5) von dem Flüssigkeitsraum (22) trennt, wobei das Gehäuse (2, 44) bis auf den Einstieg (11) derart luftdicht geschlossen ist, dass das Luftpolster (21) beim Ansteigen der Flüssigkeit in dem Gehäuse (2, 44) gefangen ist, ***dadurch gekennzeichnet, dass*** das Trennelement das Luftpolster (21) ist und die Köderbox (1, 40, 45, 46) ein rohrförmiges, an dem oberen Ende (8) geschlossenes Gehäuse (2, 44) aufweist mit einem Einstieg (11) für das Nagetier an dem unteren Ende (10) und eine radial verlaufende Kammer (3, 41, 50), in der die Fressstelle (5) ausgebildet ist.

2. Köderbox nach dem vorgenannten Anspruch, ***dadurch gekennzeichnet, dass*** der Einstieg (11) radial in das Gehäuse (2) führt.

3. Köderbox (1, 40, 45, 46) nach einem der vorgenannten Ansprüche, ***dadurch gekennzeichnet, dass*** das Luftpolster (21) die Fressstelle (5) umschließt.

4. Köderbox (1, 40, 45, 46) nach einem der vorgenannten Ansprüche, ***dadurch gekennzeichnet, dass*** die Kammer (3, 41, 50) einen nach Außen abfallenden Boden (43) aufweist.

5. Köderbox (1, 40, 45, 46) nach einem der vorgenannten Ansprüche, ***gekennzeichnet durch*** einen auswechselbar an der Köderbox (1, 40, 45, 46) angebrachten Deckel (16) mit dem Giftköder (4).

6. Köderbox (1, 40, 45, 46) nach einem der vorgenannten Ansprüche, ***gekennzeichnet durch*** ein berührungslos lesbares Identifikationselement (18, 19) zum Identifizieren der Köderbox (1, 40, 45, 46) und/oder des Giftköders (4).

7. Köderbox (1, 40, 45, 46) nach einem der vorgenannten Ansprüche, ***gekennzeichnet durch*** eine Halterung zum Haltern der Köderbox (1, 40, 45, 46) an einer Wand (47) eines Kanalbauwerks.

8. Verfahren zum Trennen einer Fressstelle (5) in einem Gehäuse (2, 44) einer Köderbox (1, 40, 45, 46) für einen Giftköder (4), die von einer Außenseite der Köderbox (1, 40, 45, 46) durch einen Einstieg (11) an einem unteren Ende (10) des Gehäuses (2, 44) für ein Nagetier zugänglich, in einem Luftpolster (21) angeordnet ist, von einer außerhalb des Gehäuses (2, 44) über einen Grenzpegel (12), oberhalb dessen die Zugänglichkeit der Fressstelle (5) für das Nagetier nicht mehr gewährleistet ist, ansteigenden Flüssigkeit, wobei innerhalb des Gehäuses (2, 44) ein Trennelement einen Flüssigkeitsraum (22) mit der Flüssigkeit begrenzt, der sich von dem Einstieg (11) bis zu dem Trennelement erstreckt und die Fressstelle (5) von dem Flüssigkeitsraum (22) trennt, wobei das Gehäuse (2, 44) bis auf den Einstieg (11) derart luftdicht geschlossen ist, dass das Luftpolster (21) beim Ansteigen der Flüssigkeit in dem Gehäuse (2, 44) gefangen ist, ***dadurch gekennzeichnet, dass*** das Trennelement das Luftpolster (21) ist und die Köderbox (1, 40, 45, 46) ein rohrförmiges, an dem oberen Ende (8) geschlossenes Gehäuse (2, 44) aufweist mit einem Einstieg (11) für das Nagetier an dem unteren Ende (10) und eine radial verlaufende Kammer (3, 41, 50), in der die Fressstelle (5) ausgebildet ist.

9. Verfahren nach dem vorgenannten Anspruch, ***dadurch gekennzeichnet, dass*** das Luftpolster (21) durch die ansteigende Flüssigkeit komprimiert wird.

## Claims

1. A bait box (1, 40, 45, 46) with a housing (2, 44), with a feeding point (5) in the housing (2, 44) for a poisonous bait (4), the feeding point being accessible for a rodent from the outside of the bait box (1, 40, 45, 46) through an entrance (11) at a lower end (10) of the housing (2, 44) and arranged in an air pocket (21) in the housing (2, 44), and with a separating element within the housing (2, 44), which, when a liquid outside the housing (2, 44) rises above a threshold level (12) above which accessibility of the feeding point (5) for the rodent is no longer ensured, limits a liquid space (22) with the liquid inside the housing (2, 44), which extends from the threshold level (12) to the separating element and separates the feeding point (5) from the liquid space (22), wherein the housing (2, 44), safe for the entrance (11), is closed in an airtight manner such that as the liquid rises the air pocket (21) is trapped in the housing (2, 44), **characterised in that** the separating element is the air pocket (21) and the bait box (1, 40, 45, 46) comprises a tubular housing (2, 44) closed at the upper end (8) with an entrance (11) for the rodent at the lower end (10) and a radially extending chamber (3, 41, 50), in which the feeding point (5) is formed.

2. The bait box according to the preceding claim, **characterised in that** the entrance (11) leads radially into the housing (2).

3. The bait box (1, 40, 45, 46) according to one of the preceding claims, **characterised in that** the air pocket (21) encloses the feeding point (5).

4. The bait box (1, 40, 45, 46) according to one of the preceding claims, **characterised in that** the chamber (3, 41, 50) comprises an outwardly sloping floor (43).

5. The bait box (1, 40, 45, 46) according to one of the preceding claims, **characterised by** a lid (16) with the poisonous bait (4), the lid being attached to the bait box (1, 40, 45, 46) in a replaceable manner.

6. The bait box (1, 40, 45, 46) according to one of the preceding claims, **characterised by** a contactlessly readable identification element (18, 19) for identifying the bait box (1, 40, 45, 46) and/or the poisonous bait (4).

7. The bait box (1, 40, 45, 46) according to one of the preceding claims, **characterised by** a bracket for mounting the bait box (1, 40, 45, 46) on a wall (47) of a canal structure.

8. A method for separating a feeding point (5) in a housing (2, 44) of a bait box (1, 40, 45, 46) for a poisonous bait (4), the feeding point being accessible for a rodent from the outside of the bait box (1, 40, 45, 46) through an entrance (11) at a lower end (10) of the housing (2, 44) and arranged in an air pocket (21), from a liquid outside the housing (2, 44) as it rises past a threshold level (12) above which accessibility of the feeding point (5) for the rodent is no longer ensured, wherein inside the housing (2, 44) a separating element limits a liquid space (22) with the liquid, which extends from the entrance (11) as far as the separating element and separates the feeding point (5) from the liquid space (22), wherein the housing (2, 44), safe for the entrance (11), is closed in an airtight manner such that the air pocket (21), as the liquid rises, is trapped in the housing (2, 44), **characterised in that** the separating element is the air pocket (21) and the bait box (1, 40, 45, 46) is a tubular housing (2, 44) closed at the upper end (8) with an entrance (11) for the rodent at the lower end (10) and a radially extending chamber (3, 41, 50), in which the feeding point (5) is formed.

9. The method according to the preceding claims, **characterised in that** the air pocket (21) is compressed by the rising liquid.

## Revendications

1. Boîte à appâts (1, 40, 45, 46) comprenant un boîtier (2, 44), un point de consommation (5) dans le boîtier (2, 44) pour un appât empoisonné (4) qui est placé dans le boîtier (2, 44) dans un coussin d'air (21), en étant accessible à un rongeur par une face extérieure de la boîte à appâts (1, 40, 45, 46) par une entrée (11) pratiquée sur une extrémité inférieure (10) du boîtier (2, 44), et comprenant un élément séparateur qui, lors de la montée d'un liquide à l'extérieur du boîtier (2, 44) au-delà d'un niveau limite (12) au-dessus duquel l'accessibilité du point de consommation (5) n'est plus garantie pour le rongeur, limite à l'intérieur du boîtier (2, 44) un compartiment à liquide (22) contenant le liquide et s'étendant du niveau limite (12) jusqu'à l'élément séparateur et qui sépare le point de consommation (5) du compartiment à liquide (22), le boîtier (2, 44) étant fermé de manière hermétique à l'air à l'exception de l'entrée (11), de sorte que le coussin d'air (21) soit capturé lors de la montée du liquide dans le boîtier (2, 44), **caractérisée en ce que** l'élément séparateur est le coussin d'air (21) et **en ce que** la boîte à appât (1, 40, 45, 46) présente un boîtier de forme tubulaire (2, 44) fermé sur l'extrémité supérieure (8) avec une entrée (11) pour le rongeur sur l'extrémité inférieure (10) et une chambre (3, 41, 50) s'étendant radialement dans laquelle est constitué le point de consommation (5).

2. Boîte à appât selon la revendication précédente, **caractérisée en ce que** l'accès (11) mène radialement dans le boîtier (2).

3. Boîte à appâts (1, 40, 45, 46) selon l'une quelconque des revendications précédentes, **caractérisée en ce que** le coussin d'air (21) entoure le point de consommation (5) .

4. Boîte à appât (1, 40, 45, 46) selon l'une quelconque des revendications précédentes, **caractérisée en ce que** la chambre (3, 41, 50) comporte un fond inférieur (43) décroissant vers l'extérieur.

5. Boîte à appât (1, 40, 45, 46) selon l'une quelconque des revendications précédentes, **caractérisée par** un couvercle (16) posé de manière interchangeable sur la boîte à appât (1, 40, 45, 46) et comportant l'appât empoisonné (4).

6. Boîte à appât (1, 40, 45, 46) selon l'une quelconque des revendications précédentes, **caractérisée par** un élément d'identification (18, 19) lisible sans contact pour identifier la boîte à appât (1, 40, 45, 46) et/ou l'appât empoisonné (4).

7. Boîte à appât (1, 40, 45, 46) selon l'une quelconque des revendications précédentes, **caractérisée par** un support pour fixer la boîte à appât (1, 40, 45, 46) sur un mur (47) d'un ouvrage de canal.

8. Procédé, destiné à séparer un point de consommation (5) dans un boîtier (2, 44) d'une boîte à appât (1, 40, 45, 46) pour un appât empoisonné (4), qui est placé dans un coussin d'air (21) en étant accessible à un rongeur par une face extérieure de la boîte à appâts (1, 40, 45, 46) par une entrée (11) pratiquée sur une extrémité inférieure (10) du boîtier (2, 44) d'un liquide montant à l'extérieur du boîtier (2, 44) au-delà d'un niveau limite (12) au-dessus duquel l'accessibilité du point de consommation (5) n'est plus garantie pour le rongeur, un élément séparateur limitant à l'intérieur du boîtier (2, 44) un compartiment à liquide (22) contenant le liquide, qui s'étend de l'entrée (11) jusqu'à l'élément séparateur, et séparant le point de consommation (5) du compartiment à liquide (22), le boîtier (2, 44) étant fermé de manière hermétique à l'air à l'exception de l'entrée (11), de sorte que le coussin d'air (21) soit capturé lors de la montée du liquide dans le boîtier (2, 44), **caractérisé en ce que** l'élément séparateur est le coussin d'air (21) et **en ce que** la boîte à appât (1, 40, 45, 46) comporte un boîtier de forme tubulaire (2, 44) fermé sur l'extrémité supérieure (8) avec une entrée (11) pour le rongeur sur l'extrémité inférieure (10) et une chambre s'étendant radialement (3, 41, 50), dans laquelle est constitué le point de consommation (5).

9. Procédé selon la revendication précédente, **caractérisé en ce que** le coussin d'air (21) est comprimé par le liquide montant.
